# EUROPEAN PATENT APPLICATION

(11) **EP 1 845 580 A1**
(43) Date of publication of application: **17.10.2007**
(21) Application number: 06711590.7
(22) Date of filing: 12.01.2006
(51) Int. Cl.: H01M 8/24, H01M 8/12

(54) **SOLID OXIDE TYPE FUEL CELL**

(30) Priority: 14.01.2005 JP 2005007122; 05.01.2006 JP 2006000696
(71) Applicant: Mitsubishi Materials Corporation, Tokyo 100-0004 (JP); THE KANSAI ELECTRIC POWER CO., INC., Kita-ku Osaka 530-8270 (JP)
(72) Inventor: KOTANI, Takafumi c/o Mitsubishi Materials Corp., Naka-shi, Ibaraki 3110102 (JP); MIYAZAWA, Takashi c/o Mitsubishi Materials Corp., Naka-shi, Ibaraki 3110102 (JP); MURAKAMI, Naoya c/o Mitsubishi Materials Corp., Naka-shi, Ibaraki 3110102 (JP); AKBAY, Taner c/o Mitsubishi Materials Corp., Naka-shi, Ibaraki 3110102 (JP)
(74) Representative: Gillard, Richard Edward
(86) International application number: PCT/JP2006/300267
(87) International publication number: WO 2006/075647

(57) **Abstract**

It is possible to improve the power generation efficiency by uniformalizing the temperature distribution of a fuel cell stack in lamination direction. In a solid oxide type fuel cell, a power generation cell and a separator are alternately laminated so as to constitute a fuel cell stack. On the middle stage of the fuel cell stack in the lamination direction, a radiator (20) is arranged between the separators. The radiator (20) is formed by a columnar support portion (22) serving as a cell current path and supporting the weight in the lamination direction, flange portions (21) arranged at both ends of the support portion (22) so as to be in contact with the adjacent separators, and a plate member (23) for radiation.

## Description

### Technical Field

The present invention relates to a solid oxide type fuel cell having a structure in which power generation cells and separators are alternately laminated and, in particular, to a solid oxide type fuel cell capable of ensuring uniform temperature in the lamination direction of a stack.

### Background Art

In recent years, the solid oxide type fuel cell, which converts chemical energy of fuel directly into electric energy, has received widespread attention as a highly efficient and clean generator. The solid oxide type fuel cell has a laminated structure in which a solid electrolyte layer made of an oxide ion conductor is sandwiched between an air electrode layer (a cathode) and a fuel electrode layer (an anode) from both sides.

In the process of electric power generation, oxidant gas (oxygen) is supplied to the air electrode layer side, and fuel gas (H₂, CO, CH₄ or the like) is supplied to the fuel electrode side, respectively, as reaction gases. The air electrode layer and the fuel electrode layer are both made to be porous so that reaction gases can reach interfaces in contact with the solid electrolyte layer.

Oxygen supplied to the air electrode side passes through pores in the air electrode layer and reaches near the interface in contact with the solid electrolyte layer, and in that portion, the oxygen receives electrons from the air electrode layer to be ionized into oxide ions (O²⁻). These generated oxide ions diffuse and move in the solid electrolyte layer toward the fuel electrode layer. The oxide ions having reached near the interface in contact with the fuel electrode layer react with fuel gas in that portion to produce reaction products (H₂O, CO₂ and the like), and release electrons to the fuel electrode layer. The electrodes generated by the electrode reaction (power generation reaction) can be taken out as an electromotive force by an external load of another route.

A flat plate type solid oxide fuel cell is constructed by alternately laminating a plurality of power generation cells, current collectors and separators to form a stacked body (hereinafter referred to as a "fuel cell stack") and by applying a load in the lamination direction to the fuel cell stack to bring the above respective components into close pressure contact with each other.

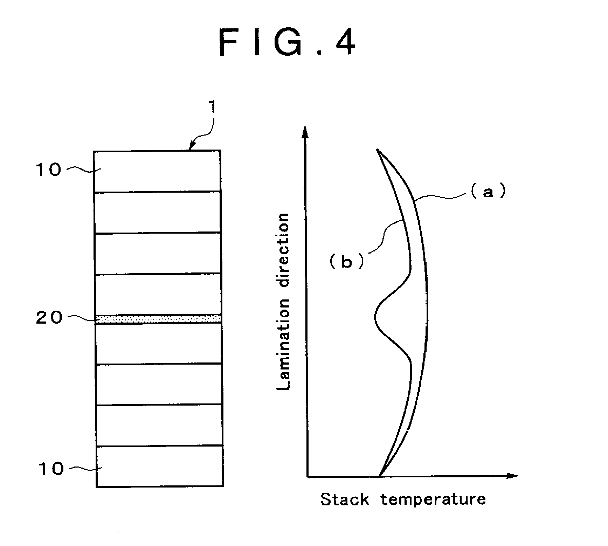

The flat plate type fuel cell stack has a tendency for the cell temperature (separator temperature) of a middle stack portion to become extremely higher than that of an end stack portion, as shown by a temperature distribution curve (a) in Figure 4. This is because the fuel cell stack is of a laminated structure, the middle portion of which has lower radiation capability than both end portions, resulting in difficult dispersion of Joule heat to the outside of cells during electric power generation.

When a temperature difference occurs in the lamination direction of the fuel cell stack, a hot portion thereof has low concentration of flowing gas and breaks uniform distribution of reaction gas to respective power generation cells, so that cell voltages become uneven.
A fuel cell stack constructed by connecting a number of power generation cells in series has the following problem: when such uneven voltages occur in the respective power generation cells, a total output of fuel cells is restricted by a part of low-voltage cells, resulting in inefficient electric power generation.

As a technique for uniformalizing the temperature of a fuel cell stack, a fuel cell the radiation of which is controlled by attaching radiators to respective separators has been disclosed in Japanese Patent Laid-Open No. 2004-273140. The Japanese Patent Laid-Open No. 2004-273140 has proposed the fuel cell that is set so as to make the cross-sectional area of the heat dissipating fins variable in accordance with positions of the separators in respect to the layer direction in which power generating parts and the separators are layered.

### Disclosure of the Invention

The purpose of the present invention is to provide a fuel cell capable of attaining high power generation efficiency and high durability by uniformalizing temperature distribution of a fuel cell stack in a lamination direction.

According to the present invention, there is provided a solid oxide type fuel cell, having a fuel cell stack constructed by alternately laminating power generation cells and separators and generating an electric power generation reaction by supplying reaction gas to the respective power generation cells, the solid oxide type fuel cell comprising: a radiator disposed between the separators at a middle portion of the fuel cell stack in the lamination direction, the radiator including a columnar support portion mainly serving as a path for cell currents and supporting a load in the lamination direction, flange portions provided on both ends of the support portion and providing a contact with the adjacent separators, and a radiation member.

Preferably, the support portion of the solid oxide type fuel cell is positioned at the central portion of the fuel cell stack in a plane direction thereof.

Moreover, the plurality of radiation members of the solid oxide type fuel cell are projected in a radial condition from a peripheral side surface of the support portion.

Furthermore, according to the present invention, there is provided a solid oxide type fuel cell, having a fuel cell stack constructed by alternately laminating power generation cells and separators and generating an electric power generation reaction by supplying reaction gas to the respective power generation cells, the solid oxide type fuel cell comprising: a radiator disposed between the separators at a middle portion of the fuel cell stack in the lamination direction, the radiator including a plurality of radiation members erected in the lamination direction and arranged side by side in a line, serving as a path for cell currents and supporting a load in the lamination direction, and flange portions positioned on both ends of the radiation member and providing a contact with adjacent separators.

According to the present invention, since a radiator is disposed at a middle portion of the stack which becomes hot at the time of the power generation, it becomes possible to radiate Joule heat generated by a power generation reaction from the radiator through adjacent separators, thus suppressing an excessive temperature rise at the middle portion of the stack and uniformalizing a temperature distribution in the lamination direction of the stack. This enables high efficiency of electric power generation as the whole stack and prevention of breakage to the power generating cells, such as peeling of an electrode layer, which is apt to occur under a high temperature, thus enhancing the durability of the fuel cell.

### Brief Description of the Drawings

Figure 1 is a view showing a configuration of a fuel cell stack according to the present invention;
Figure 2 is a perspective view showing a structure of a radiator used in the fuel cell stack;
Figure 3 is a perspective view showing a structure of a radiator different from the one in Figure 2, used in the fuel cell stack;
Figure 4 is a view showing a temperature distribution of the fuel cell stack in the lamination direction; and
Figure 5 is a perspective view showing a structure of a radiator different from the one in Figure 3, used in the fuel cell stack according to the present invention.

### Description of Symbols

- 1: fuel cell stack
- 5: power generation cell
- 8: separator
- 20: radiator
- 21: flange portion
- 22: support portion
- 23, 24: radiation members

### Best Mode for Carrying Out the Invention

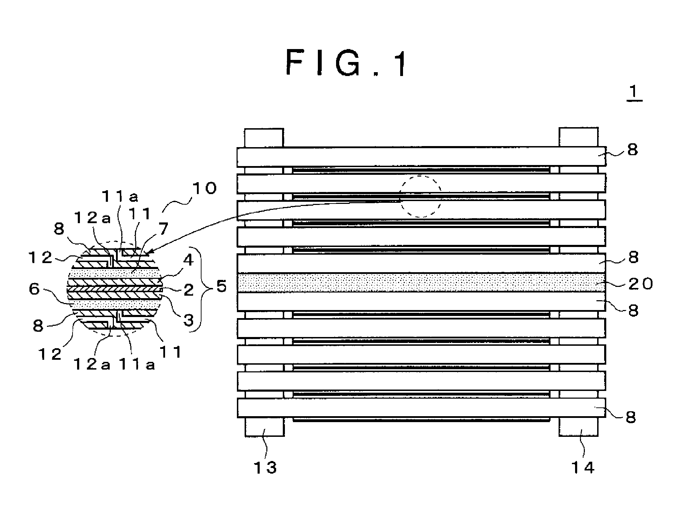

Description will be made below of a first embodiment of the present invention with reference to Figures 1 to 5.

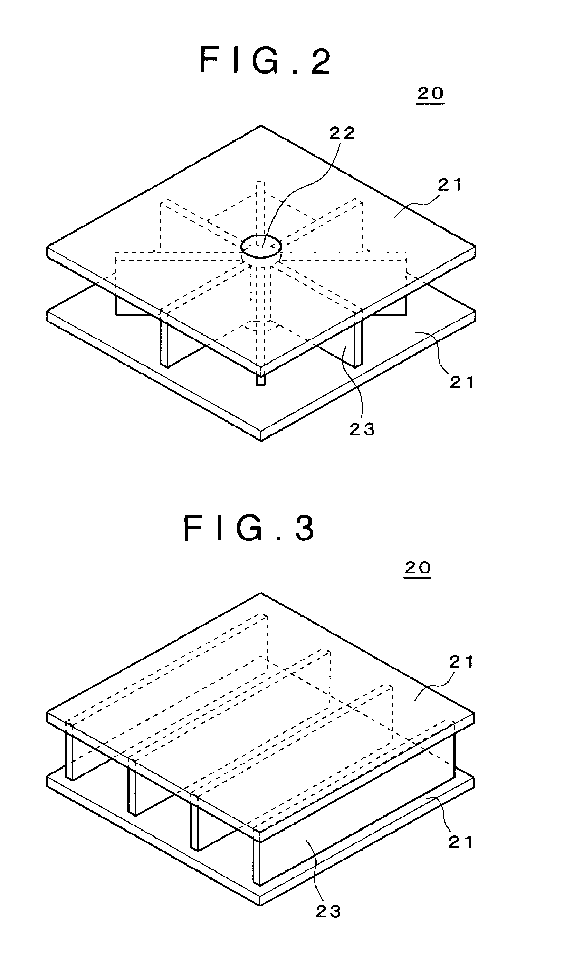

Figure 1 shows a configuration of a fuel cell stack of a flat plate type solid oxide fuel cell, Figures 2, 3 and 5 show a structure of a radiator used in the fuel cell stack, and Figure 4 shows a temperature distribution of the fuel cell stack in the lamination direction.

As shown in Figure 1, the fuel cell stack 1 is constructed by laminating a number of unit cells 10. Each unit cell 10 comprises a power generation cell 5 constructed by disposing a fuel electrode layer 3 and an air electrode layer 4 on both faces of a solid electrolyte layer 2, a fuel electrode current collector 6 disposed outside the fuel electrode layer 3, a fuel electrode current collector 7 disposed on the outside of the air electrode layer 4, and a separator 8 disposed outside each of the current collectors 6, 7.

In the unit cell 10 of the above structure, the solid electrolyte layer 2 is made of stabilized zirconia (YSZ) doped with yttria or the like; the fuel electrode layer 3 of metal such as Ni or Co, or cermet such as Ni-YSZ or Co-YSZ; the air electrode layer of LaMnO₃ or LaCoO₃; the fuel electrode current collector 6 of spongy porous sintered metal plate such as Ni based alloy; the air electrode current collector 7 of spongy porous sintered metal plate such as Ag based alloy; and the separator 8 of stainless or the like.

The separator 8 has a function of electrically connecting the power generation cells 5 to each other and supplying reaction gas to the power generation cell 5, and further a fuel gas passage 11 and an oxidant gas passage 12. The fuel gas passage 11 introduces fuel gas from an outer peripheral surface of the separator 8 and discharges the gas from the center portion 11a of a surface facing the fuel electrode current collector 6, while the oxidant gas passage 12 introduces oxidant gas from the outer peripheral surface of the separator 8 and discharges the gas from the center portion 12a of a surface facing the air electrode current collector 7.

Inside the fuel cell stack 1, as shown in Figure 1, there are formed a fuel gas manifold 13 and an oxidant gas manifold 14 extending in the stack lamination direction. The fuel gas manifold 13 is communicated with the fuel gas passage 11 of each separator 8, while the oxidant gas manifold 14 is communicated with the oxidant gas passage 12 of each separator. At the time of power generation, the fuel gas and oxidant gas (air) supplied from the outside are introduced into the manifolds 13, 14, respective reaction gases are discharged to the fuel electrode current collector 6 and the air electrode current collector 7 through the respective gas passages 11, 12 of the respective separators 8, diffuse and move inside these current collectors 6, 7, and reach the respective electrodes of the power generation cells 5, thus generating a power generation reaction.

The fuel cell stack 1 uses a sealless structure without attaching gas leak prevention seal to an outer peripheral portion of the power generation cell 5, which permits excess gas (exhaust gas) not consumed by a power generation reaction to be freely released from the outer peripheral portion of the power generation cell. Moreover, the Joule heat of the power generation cell portion generated in the process of the power generation reaction is thermally transmitted to the adjacent separator 8 and radiated from the outer peripheral portion of the separator.

In one embodiment of the preset invention, as shown in Figure 1, the radiator 20 is disposed around the middle stage of the fuel cell stack 1 with the top and bottom thereof sandwiched by the separators 8.
The radiator 20 is formed of stainless steel plate with excellent thermal conductivity and, as shown in Figure 2, includes a cylindrical support portion 22, a plurality of radiation plate members 23 (8 pcs) (radiating fins 23) radially protruded from a peripheral side surface of the support portion 22 and flange portions 21, 21 provided on both top and bottom ends of the support portion 22. The support portion 22 is disposed so as to be positioned in the center portion of the fuel cell stack 1 in the plane direction thereof.

The flange portion 21, formed into a rectangular one of the same shape and size as the separator 8, is disposed in a closely contacted state between the separators 8, thus providing a good electric contact with the adjacent separators 8, 8. For better contact with the adjacent separators, for example, a thin sheet of spongy porous sintered metal such as Ni based alloy may be intervened in between the separator 8 and the flange portion 21.

The support portion 22 mainly becomes a path for cell current and supports a load in the lamination direction applied to the top flange portion 21. The support portion 22 is disposed at the central portion of the stack in the plane direction, by which stack currents running in the lamination direction can be relayed to the power generation cell 5 at the next stage with high efficiency, concentrated on the central portion of the power generation cell 5. In Figure 2, the one support portion 22 is provided at the central portion, however, the plurality of support portions may be provided. Moreover, the support portion 22 is solid, however, may be hollow. The hollow support portion requires a hole for relieving a heat pool generated at the inside thereof to the outside, at a side portion of the cylindrical part.

The radiating fins 23 are radially provided around the support portion 22, by which the fluid ability of exhaust gas can be improved at the periphery of the radiating fin 23, thus enhancing a radiation effect by the radiating fins 23.

In this embodiment, the radiator 20 is made of stainless steel plate, however, a radiator made of iron plate with Ag plating on the surface thereof may be used. Otherwise, a radiator of stainless steel plate with aluminum spread and penetrated into surface thereof and with Fe-Ag alloy layer, which is excel in durability and radiation performance, formed thereon may be used. This can be applied to the radiator 20 as well in Figure 3, which will be described later.

As described above, the radiator 20 is disposed at the middle portion of the stack in a closely contacted state between the separators 8, 8. This permits Joule heat from the power generation cell 5 to be thermally transmitted from the whole surface of the adjacent separators 8, 8 for highly efficient radiation from the radiating fins 23, in the middle portion of the stack where the temperature is liable to be high compared with the other portion within the stack. As a result, as shown by a temperature distribution curve (b) in Figure 4, the temperature at the middle portion of the stack can be lowered all over in the lamination direction so as to approach the temperature at the lower/upper stage of the stack.

Thus, the temperature distribution of the stack in the lamination direction is made uniform, which permits a voltage distribution in the respective power generation cells 5 to be suppressed, and the temperature of the whole stack to be maintained within a predetermined temperature range suited to a power generation reaction temperature. Accordingly, highly efficient power generation can be performed without being regulated by some of the low-voltage cells, and breakage to the power generation cells 5, such as peeling of the respective electrode layers 3, 4 due to thermal stress apt to occur under a high temperature, can be prevented, thus improving durability (thermal cycle characteristics) of fuel cells.

In the embodiment shown in Figure 1, the radiator 20 is disposed at only one position of the middle portion of the stack in the lamination direction, which is an example of the layout of the radiator 20. The radiator 20 may be disposed at a plurality of arbitrary positions of the middle portion of the stack according to needs of thermal design.

Next, another example of the radiator 20 according to the present invention will be shown in Figure 3.
The radiator 20 shown in Figure 3 is composed of: the flange portions 21, 21 which are mounted on both the top and bottom ends and come into contact with the adjacent separators 8, 8; a plurality of radiation plate members 23 (4 pcs) arranged and erected in the lamination direction so as to be sandwiched between the upper and lower flange portions 21, 21. In this example, the plurality of plate members 23 function as a radiator, a path for cell currents and a support member for supporting a load in the lamination direction of the stack.
In such a configuration, the structure is simplified compared to the radiator 20 in Figure 2 although a gas flow around the plate member 23 is regulated in one direction along the plate member 23. It is natural that this configuration can provide a similar operational effect to that of the radiator 20 in Figure 2.

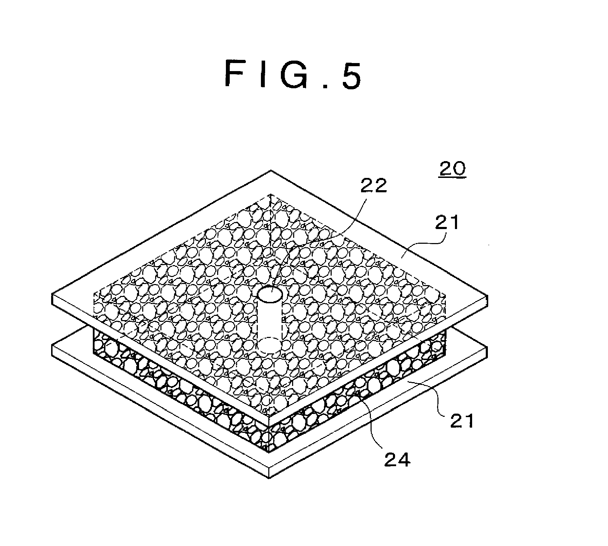

Next, further another example of the radiator 20 according to the present invention will be shown in Figure 5.
The radiator 20 shown in Figure 5 is composed of a cylindrical support portion 22, the flange portions 21, 21 provided on both top and bottom ends of the support portion 22 and the radiation member 24 made of mesh-shaped or porous material provided in between the flange portions 21, 21. In this example, as the mesh-shaped or porous member 24, for example, Ag, Pt, Au or the like, each of which has high conductivity is used to relay stack currents with high efficiency.

### Industrial Applicability

The solid oxide type fuel cell according to the present invention provides highly efficient power generation as the whole stack and prevention of breakage to the power generating cells, such as peeling of an electrode layer, which is apt to occur under a high temperature, thus enhancing the durability of the fuel cell.

## Claims

1. A solid oxide type fuel cell, having a fuel cell stack constructed by alternately laminating power generation cells and separators and generating an electric power generation reaction by supplying reaction gas to the respective power generation cells, the solid oxide type fuel cell comprising:
a radiator disposed between the separators at a middle portion of the fuel cell stack in the lamination direction,
the radiator including a columnar support portion mainly serving as a path for cell currents and supporting a load in the lamination direction, flange portions provided on both ends of the support portion and providing a contact with the adjacent separators, and a radiation member.

2. The solid oxide type fuel cell according to claim 1, wherein the support portion is positioned at the central portion of the fuel cell stack in a plane direction thereof.

3. The solid oxide type fuel cell according to claim 1, wherein the plurality of radiation members are projected in a radial condition from a peripheral side surface of the support portion.

4. A solid oxide type fuel cell, having a fuel cell stack constructed by alternately laminating power generation cells and separators and generating an electric power generation reaction by supplying reaction gas to the respective power generation cells, the solid oxide type fuel cell comprising:
a radiator disposed between the separators at a middle portion of the fuel cell stack in the lamination direction,
the radiator including a plurality of radiation members erected in the lamination direction and arranged side by side in a line, serving as a current path and supporting a load in the lamination direction, and flange portions positioned on both ends of the radiation member and providing a contact with adjacent separators.
